# EUROPEAN PATENT APPLICATION

(11) **EP 1 514 773 A2**
(43) Date of publication of application: **16.03.2005**
(21) Application number: 04255413.9
(22) Date of filing: 07.09.2004
(51) Int. Cl.: B62D 47/02

(54) **Buses**

(30) Priority: 09.09.2003 GB 0321086
(71) Applicant: Transbus International Limited, London EC4A 4TR (GB)
(72) Inventor: Gallagher, Terence Anthony, Lancashire, L39 4YH (GB); Hirst, Simon Raymond, Cheshire SK9 2GR (GB)
(74) Representative: Jennings, Nigel Robin

(57) **Abstract**

A bus body includes two longitudinal sides, each of which includes a horizontally extending waist rail and a cant rail (4) vertically spaced from one another, connected to which are a plurality of horizontally spaced vertical pillars (8). The waist rail comprises a plurality of sections (6), each of which extends between an adjacent pair of pillars (8). Each pillar (8) comprises a hollow box section with a lateral flange (12) on each side in the region of its connection to the cant rail and the waist rail. The inner surface of the lateral flanges (12) is flush with that of the box. The flanges (12) on the pillars overlie the ends of the associated waist rail sections (6), the inner surface of which is recessed so that the inner surfaces of the waist rail sections (6) and of the pillars (8) are substantially flush. The flanges on the pillars are connected to the recessed portions of the waist rail sections.

## Description

The present invention relates to buses and coaches, which are referred to herein merely as "buses", and is concerned with the construction of their body.

Bus bodies have a number of vertically spaced longitudinally extending members, connected to which is a number of horizontally spaced vertically extending members. The horizontal and vertical members divide the sides of a bus body into a number of rectangular spaces. Certain of these rectangular spaces constitute windows and are thus occupied by sheets of glass and the remainder of these spaces is occupied by metallic sheets, at least some of which may have a structural function and contribute to the overall rigidity and torsional stiffness of the bus body. Each side of a bus body typically includes a horizontally extending sole bar extending approximately at the level of the floor of the bus. Extending horizontally above the sole bar and spaced from it is a waist rail and spaced above that is a horizontal cant rail. Extending vertically between and connected to the horizontal members are vertical pillars. Connected over each rectangular space defined by the sole bar, waist rail and two adjacent pillars is typically a shear panel which is rigidly connected to the four members defining the space in question and contributes to the torsional stiffness of the body. Connected over each rectangular spaced defined by the waist rail, cant rail and two adjacent pillars is typically a sheet of glass constituting a window. Some constructions include two waist rails and two parallel lines of windows, one above the other.

The vertical and horizontal members are typically made of metal and the strength and rigidity of the joints between them are crucial for the strength and rigidity of the bus body. Various different types of complex joint are known for this purpose. In one such known type, the waist rail and pillars have an undercut groove on their side surfaces and at each joint a triangular corner piece is inserted into each right angled space between a vertical and a horizontal member. Carried by this corner piece are fasteners which may be retained in the undercut grooves and tightened by screws to impart rigidity to the joints. This is both expensive and time-consuming, as is also the formation of the numerous precisely dimensioned and positioned holes that are needed in the vertical and horizontal members.

It is thus the object of the invention to provide a bus body which is sufficiently rigid and torsionally stiff but has a reduced part count and cheaper and simpler to construct than known bus bodies.

According to the present invention, a bus body includes two longitudinal sides, each of which includes a horizontally extending waist rail and a cant rail vertically spaced from one another, connected to which are a plurality of horizontally spaced vertical pillars, the waist rail comprising a plurality of sections, each section extending between an adjacent pair of pillars, each pillar comprising a hollow box section with a lateral flange on each side in the region of its connection to the cant rail and the waist rail, the inner surface of the lateral flanges being flush with that of the box, the flanges on the pillars overlying the ends of the associated waist rail sections, the inner surface of each of which is recessed so that the inner surfaces of the waist rail sections and of the pillars are substantially flush, the flanges on the pillars being connected to the recessed portions of the waist rail sections.

Thus in the bus body in accordance with the invention, the vertical pillars have lateral flanges in those regions in which they are connected to the waist rail and the cant rail and these flanges are made use of to connect the rails to the pillars. The inner surface of each end portion of each waist rail section is cut away by an amount equal to the thickness of the lateral flanges on the pillars and the lateral flanges are received in the recesses that are thus formed. The pillars are thus received in recessed portions of the waist rail and are connected to the waist rail at those points. The connections of the pillars to the waist rail are thus extremely stable and rigid and no brackets, comer pieces or the like are needed. Furthermore, the inner surfaces of the waist rail and pillars are substantially flush with one another and this makes it very easy to attach one or more plates to the waist rail and the pillars to cover the area beneath the waist rail.

The area beneath the waist rail may be covered by a simple trim plate, that is to say a cover plate which has little or no structural function. It is, however, preferred that this area is covered by a shear plate connected to the pillars and waist rail. This plate is relatively massive and makes a significant contribution to the overall rigidity and torsional stiffness of the bus body. A respective shear plate may be provided for each adjacent pair of pillars or a single shear plate may extend along the entire length of each side of the bus body or a number of shear plates may be used, each of which is connected to a number of pairs of adjacent pillars.

The waist rail comprises a plurality of sections and these sections may be wholly separate from one another. Alternatively, the waist rail along each side of the bus body may constitute a single unitary member, from which portions are removed at regular intervals to accommodate the pillars. In this case, the individual sections of the waist rail will be connected together by a relatively flimsy web, flange or other connecting member.

The waist rail may take various forms but it is desirably extremely rigid and in the preferred embodiment it is of twin box section, the two boxes being vertically spaced and connected by a plate integral with the inner surface of the two boxes. In this embodiment, the gap between the two boxes will normally face outwardly and it is preferred that the rigidity of the waist rail is further enhanced by providing an elongate bracing plate which extends along and is connected to the outer surface of the two boxes.

As mentioned above, the inner surfaces of the waist rail and the pillars are substantially flush and this facilitates the connection of the shear plate or trim plate to the inner surface of each side of the bus body. It is also preferred that the outer surface of the waist rail is substantially flush with the outer surfaces of the pillars and this again facilitates the connection of e.g. trim plates to the outer surface of the bus body.

The rectangular areas bounded by the waist rail, the cant rail and each adjacent pair of pillars will in practice be used as a window space and a sheet of glass will therefore in practice be secured at each of these positions. This, however, forms no part of the present invention and will therefore not be described in more detail. However, the lower ends of the pillars will in practice be connected to a further horizontal member substantially at the floor level of the bus, referred to as the sole bar, and the region between the waist rail and the sole bar contributes significantly to the rigidity and torsion stiffness of the bus body and this is the reason why the shear plates are attached to the framework at this point. The rigidity of this area of the bus body can be further enhanced by the inclusion of a subsidiary pillar extending vertically between each pair of pillars, each subsidiary pillar being e.g. of hollow box section with a lateral flange on each side, the inner surface of which is flush with that of the box section, the upper end of the subsidiary pillar being connected to the associated waist rail section. In practice, the lower end will also be connected to the sole bar. It is preferred that the waist rail includes a downwardly extending flange, the inner surface of which is flush with that of the two boxes of the waist rail, the flange on the waist rail being connected to the lateral flanges on the subsidiary pillar.

The rigidity and torsional stiffness of the area below the waist rail may be further enhanced by the provision of two horizontal auxiliary rails associated with each auxiliary pillar, each auxiliary rail being connected to the associated auxiliary pillar at one end and to a pillar at the other end, its inner and outer surfaces being flush with those of the waist rail and the pillars.

In practice, a closure panel will be connected to the outer surfaces of the waist rail and the pillars.

Whilst the connection of the various members may be effected by a variety of means such as bolts or even adhesive, it is preferred that the connections are constituted by breakstem fasteners located in pre-formed holes in the connected members. Breakstem fasteners, commonly referred to as pop rivets, are available in a number of different forms and can be constructed to exert a compressive force on the connected members, when in situ. It is preferred that the breakstem fasteners which are used exert a substantial compressive force on the connected members. This is an important feature of the present invention because the use of such high tensile fasteners means that it is no longer necessary to pre-form the various holes in the members to be connected with high dimensional and positional accuracy. Thus the construction of the present invention permits these holes to be made somewhat oversized and this will permit the fastener to be positioned in them, even if they are not precisely aligned. However, there is no resultant freedom of movement at the connections because the compressive force exerted on the members by the breakstem fasteners is sufficient to immoblise the connection, thereby ensuring that relative movement of the connecting members is totally precluded. The fact that precise dimensional and positional accuracy of the holes formed in the members is no longer necessary means that the manufacturing process is made considerably simpler and cheaper.

Further features and details of the invention will become apparent from the following description of one specific embodiment of a bus body in accordance with the invention which is given by way of example with reference to the accompanying drawings, in which:
Figure 1 is a perspective view of one portion of a bus body in the course of manufacture;

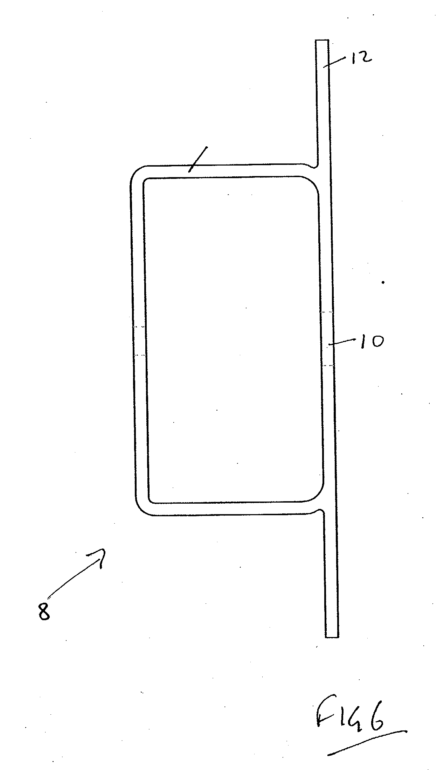

Figures 2 to 4 are scrap detailed views of the areas marked A, B, C and D, respectively, in Figure 1;
Figure 6 is a cross-sectional view showing the profile of the pillars; and
Figure 7 is a cross-sectional view showing the profile of the waist rail.

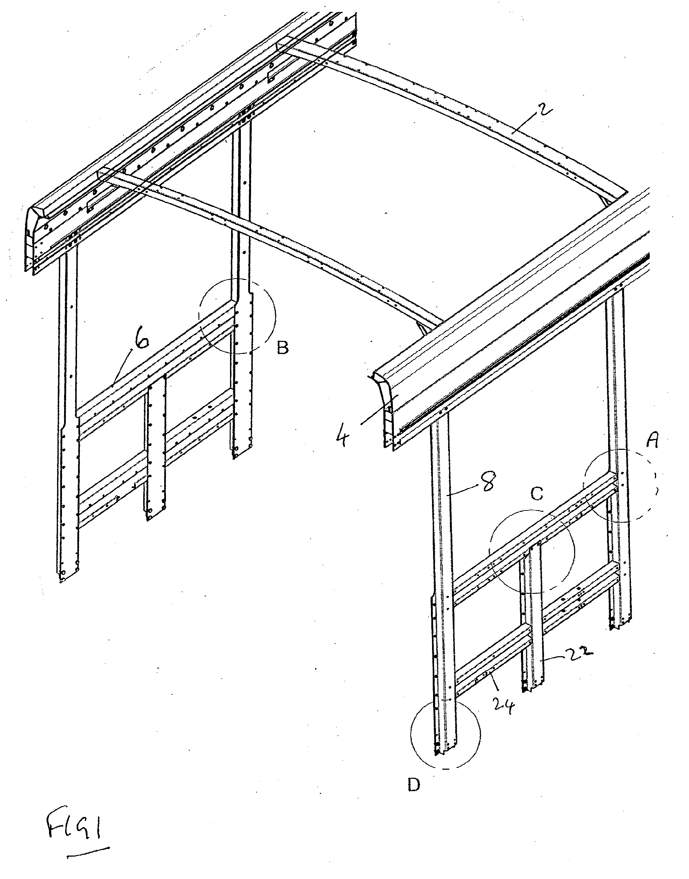

Referring firstly to Figure 1, the bus body has two sides, each of which comprises a framework of interconnected members. The two frameworks are connected together by roof spars 2 and by the floor of the bus, which is not shown. Each side of the framework comprises a horizontal, longitudinally extending cant rail 4 at ceiling height, below which is a horizontal, longitudinally extending waist rail, which is sub-divided into a plurality of waist rail sections 6. At floor level, there is a further horizontal, longitudinally extending member referred to as a sole bar, which is not shown in the drawings. Connected to the sole bar, the waist rail sections 6 and the cant rail 4 is a plurality of horizontally spaced, vertical pillars 8.

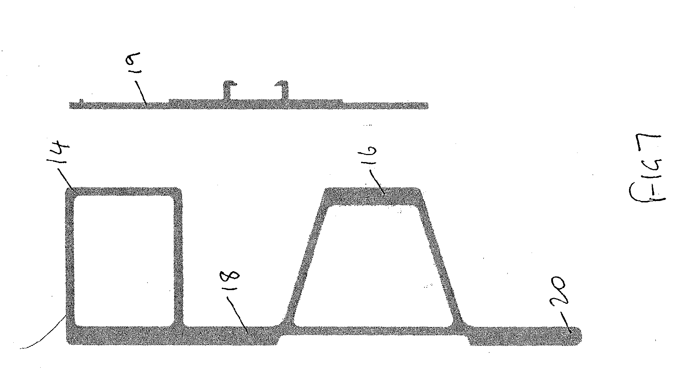

As may be seen in Figure 6, each pillar 8 is of hollow rectangular box section and integral with the inner wall 10 of the box on each side is a lateral flange 12. As may be seen in Figure 7, each cant rail section 6 is of twin box section. One box 14 is of hollow rectangular shape whilst the other box 16 is of truncated isosceles triangle shape. The inner walls of the two boxes 14 and 16 are connected by an integral plate 18. Also integral with the rear wall of the box 16 is a downwardly projecting flange 20. This twin box section is inherently very rigid and torsionally stiff but its rigidity and stiffness are further enhanced by connecting to the outer surfaces of the two boxes 14 and 16 a bracing plate 19 which extends along the length of the two boxes. The plate 19 is connected to the boxes by means of connectors passing through holes in the bracing plate 19 and in the outer surfaces of the boxes. In the present case, the bracing plate 19 also carries outward projections for the connection of glazing bars but this forms no part of the present invention and will therefore not be described in detail.

A portion of the inner surface of each waist rail section 6 at each end is removed by machining to a depth equal to the thickness of the lateral flanges 12 on the pillars. The lateral flanges of the associated pillars are received and are a relatively close fit in these recesses and the waist rail sections are connected to the pillars by passing elongate fasteners through holes formed in the flanges and in each of the two boxes of the waist rail section. The waist rail sections and the pillars are so dimensioned that their inner and outer surfaces or front and rear surfaces are substantially flush.

The rectangular spaces defined by the cant rail, adjacent pairs of pillars and the associated waist rail section constitute window spaces. The lateral flanges 12 on the columns are removed or not provided in the region of these window spaces. Sheets of glass are retained in the window spaces in a manner which forms no part of the present invention.

The rectangular areas bounded by the sole bar, adjacent pairs of pillars and the associated waist rail section is an important contributor to the rigidity and torsional stiffness of the bus body. An auxiliary or stub pillar 22 is therefore provided in each of these rectangular spaces extending between and connected to the sole bar and the mid-point of the associated waist rail section. This auxiliary pillar is of hollow box section with side flanges and corresponds to the pillars 8. Extending between each side of the auxiliary pillar 22 and the adjacent pillar 8 is an auxiliary rail 24, whose cross-section corresponds to that of the waist rail 6. The auxiliary rail 24 is connected at each end by further elongate fasteners which pass through each box and through the flange of the associated pillar 8 and auxiliary pillar 22. The front and rear surfaces of the auxiliary pillar 22 and auxiliary rail 24 are flush with those of the pillars 8 and the waist rail 6. A shear panel (not shown) is connected to the inner surfaces of each waist rail section 6 and to the associated section of the sole bar and the associated pillars 8, auxiliary pillar 22 and auxiliary rails 24. A closure plate, which has little or no structural function, is also connected to the external surfaces of these members.

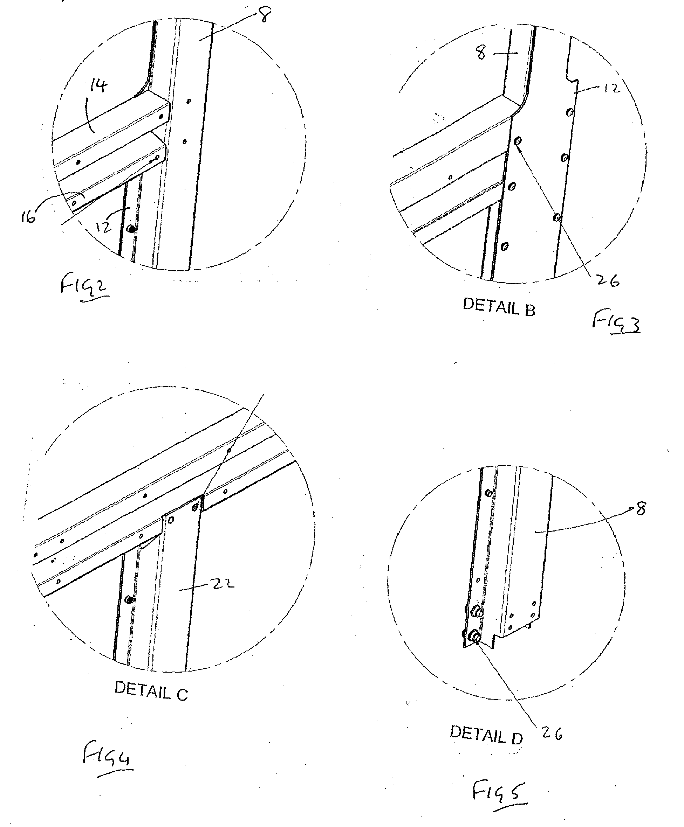

All the connections referred to above are effected by means of breakstem connectors, commonly referred to as pop rivets, of high tensile type. These connectors exert a substantial compressive force on the members which they connect together and this force is sufficient to prevent any relative movement of the two connected members. The use of such connectors therefore eliminates the need for the holes to be formed in the members in a highly dimensionally and positionally accurate manner and this results in a considerable simplification and cost saving in the assembly process. Such connectors are known per se and are illustrated e.g. at 26 in Figures 3 and 5.

## Claims

1. A bus body including two longitudinal sides, each of which includes a horizontally extending waist rail and a cant rail vertically spaced from one another, connected to which are a plurality of horizontally spaced vertical pillars, the waist rail comprising a plurality of sections, each section extending between an adjacent pair of pillars, each pillar comprising a hollow box section with a lateral flange on each side in the region of its connection to the cant rail and the waist rail, the inner surface of the lateral flanges being flush with that of the box, the flanges on the pillars overlying the ends of the associated waist rail sections, the inner surface of which is recessed so that the inner surfaces of the waist rail sections and of the pillars are substantially flush, the flanges on the pillars being connected to the recessed portions of the waist rail sections.

2. A bus body as claimed in Claim 1 in which one or more shear plates are connected to the pillars and the waist rail.

3. A bus body as claimed in Claim 2 in which the or each shear plate is connected to the inner surface of one or more waist rail sections and of the associated pillars.

4. A busy body as claimed in any one of Claims 1 to 3 in which the waist rail is of twin box section, the two boxes being vertically spaced and connected by a plate integral with the inner surface of the two boxes.

5. A bus body as claimed in Claim 4 including an elongate bracing plate extending along and connected to the outer surface of the two boxes.

6. A bus body as claimed in any one of the preceding claims in which the outer surface of the waist rail is substantially flush with the outer surfaces of the pillars.

7. A bus body as claimed in Claim 1 or 2 including a subsidiary pillar extending vertically between each pair of pillars, each subsidiary pillar having a lateral flange on each side, the inner surface of which is flush with that of the box section, the upper end of the subsidiary pillar being connected to the associated waist rail section.

8. A bus body as claimed in Claim 7 in which the waist rail includes a downwardly extending flange, the inner surface of which is flush with that of the two boxes, the flange on the waist rail being connected to the lateral flanges on the subsidiary pillar.

9. A bus body as claimed in Claim 7 or 8 including two horizontal auxiliary rails associated with each auxiliary pillar, each auxiliary rail being connected to the associated auxiliary pillar and to a pillar, its inner and outer surfaces being flush with those of the waist rail and the pillars.

10. A bus body as claimed in any one of the preceding claims including a closure panel connected to the outer surfaces of the waist rail and the pillars.

11. A bus body as claimed in any one of the preceding claims in which at least some of the connections are effected by means of breakstem fasteners located in pre-formed holes in the connected members.
